# EUROPEAN PATENT APPLICATION

(11) **EP 3 825 869 A1**
(43) Date of publication of application: **26.05.2021**
(21) Application number: 21164720.1
(22) Date of filing: 24.03.2021
(51) Int. Cl.: G06F 16/33

(54) **METHOD AND APPARATUS FOR PUSHING INFORMATION, ELECTRONIC DEVICE, MEDIUM AND COMPUTER PROGRAM PRODUCT**

(30) Priority: 01.04.2020 CN 202010249560
(71) Applicant: BAIDU ONLINE NETWORK TECHNOLOGY (BEIJING) CO., LTD., Beijing 100085 (CN)
(72) Inventor: FAN, Miao, Beijing 100085 (CN); ZHOU, Tong, Beijing 100085 (CN); HUANG, Jizhou, Beijing 100085 (CN)
(74) Representative: Mewburn Ellis LLP

(57) **Abstract**

Embodiments of the present disclosure disclose a method and apparatus for pushing information, an electronic device, a medium and a computer program product. A specific embodiment of the method includes: performing informatization processing on user comment sentences based on a consensus phrase set, to obtain a candidate recommendation information set, the candidate recommendation information set comprising at least one consensus comment sentence, and the consensus phrase set comprising: a consensus phrase presenting in at least two pieces of user comment sentences; determining a representation vector of each consensus comment sentence in the candidate recommendation information set; and determining, based on the determined representation vector of each consensus comment sentence, an attractiveness ranking position of each consensus comment sentence in the candidate recommendation information set, and pushing information according to the determined attractiveness ranking positions.

## Description

### TECHNICAL FIELD

Embodiments of the present disclosure relate to the field of computer technology, specifically to the field of intelligent search technology, and more specifically to a method and apparatus for pushing information.

### BACKGROUND

There are two existing mainstream technology implementation schemes for generating point of interest (POI) recommendation reason: manual review and automatic generation.

The manual review method generally includes several steps: first, evaluating all of the comments under a certain POI, and scoring the comments according to a standard; then performing a more detailed sorting based on the scores to find a comment of best quality. Then, based on the comment of best quality, image selection, text modification and topic interception are performed. The manual review method relies on large number of operators, who usually need to browse all of the comments to find usable comments, and for the found comments, they need to read the texts carefully to cut out attractive recommendation reasons. Different standards of different operators may bring their own subjective judgments during selecting comments and intercepting topics, resulting in fluctuations in the quality of selection results. This method takes a long time, is costly, and has unstable effects.

The automatic generation method benefits from neural networks, and uses manually intercepted or written recommendation reasons as supervised training data. Specifically, all of comment texts are first preprocessed, and high-quality comment fragments are kept and used as recall candidate sets. A neural network-based text encoding classification model is used to predict whether each candidate text is a target recommendation reason. At the same time, the sorting results output by the model may also be further optimized through online click data.

### SUMMARY

Embodiments of the present disclosure propose a method and apparatus for pushing information, an electronic device, a medium and a computer program product.

In the first aspect, some embodiments of the present disclosure provide a method for pushing information. The method includes: performing informatization processing on all of user comment sentences based on a consensus phrase set, to obtain a candidate recommendation information set, the candidate recommendation information set comprising at least one consensus comment sentence, and the consensus phrase set comprising: a consensus phrase presenting in at least two pieces of user comment sentences; determine a representation vector of each consensus comment sentence in the candidate recommendation information set; determine, based on the determined representation vector of each consensus comment sentence, an attractiveness ranking position of each consensus comment sentence in the candidate recommendation information set, and pushing information according to the determined attractiveness ranking positions.

In a second aspect, some embodiments of the present disclosure provide an apparatus for pushing information. The apparatus includes: a preprocessing module, configured to perform informatization processing on user comment sentences based on a consensus phrase set, to obtain a candidate recommendation information set, the candidate recommendation information set comprising at least one consensus comment sentence, and the consensus phrase set comprising: a consensus phrase presenting in at least two pieces of user comment sentences; a vector module configured to determine a representation vector of each consensus comment sentence in the candidate recommendation information set; a pushing module, configured to determine, based on the determined representation vector of each consensus comment sentence, an attractiveness ranking position of each consensus comment sentence in the candidate recommendation information set, and pushing information according to the determined attractiveness ranking positions.

In a third aspect, some embodiments of the present disclosure provide an electronic device that includes: one or more processors; a storage apparatus on which one or more programs are stored; the one or more programs, when executed by the one or more processors, cause the one or more processors to implement the method according to any one of the implementations described in the first aspect.

In a fourth aspect, some embodiments of the present disclosure provide a computer-readable medium, storing a computer program thereon, the program, when executed by a processor, causes the processor to implement the method according to any one of the implementations described in the first aspect.

In a fifth aspect, some embodiments of the present disclosure provide computer program product comprising a computer program, the computer program, when executed by a processor, causes the method according to any one of the implementations described in the first aspect to be implemented.

The method and apparatus for pushing information provided by embodiments of the present disclosure, first by performing informatization processing on user comment sentences based on a consensus phrase set, to obtain a candidate recommendation information set, the candidate recommendation information set comprising at least one consensus comment sentence, and the consensus phrase set comprising: a consensus phrase presenting in at least two pieces of user comment sentences; then determining a representation vector of each consensus comment sentence in the candidate recommendation information set; and finally determining, based on the determined representation vector of each consensus comment sentence, an attractiveness ranking position of each consensus comment sentence in the candidate recommendation information set, and pushing information according to the determined attractiveness ranking positions. Therefore, the push information may be automatically extracted after processing the existing user comment sentences, without a large amount of supervision data for supervision, which saves the cost of data supervision, saves the cost of manual review, has high push efficiency, and improves user experience.

### BRIEF DESCRIPTION OF THE DRAWINGS

After reading detailed descriptions of non-limiting embodiments with reference to the following accompanying drawings, other features, objectives and advantages of the present disclosure will become more apparent:
Fig. 1 is a diagram of an exemplary system architecture in which an embodiment of the present disclosure may be implemented;
Fig. 2 is a flowchart of a method for pushing information according to an embodiment of the present disclosure;
Fig. 3 is a schematic diagram of an application scenario of forming a consensus phrase set according to an embodiment of the present disclosure;
Fig. 4 is a flowchart of a method for pushing information according to another embodiment of the present disclosure;
Fig. 5 is an exemplary flowchart of obtaining a candidate recommendation information set based on a consensus phrase set according to an embodiment of the present disclosure;
Fig. 6 is a schematic structural diagram of a trained recommendation information model according to an embodiment of the present disclosure;
Fig. 7 is an exemplary flowchart of pushing information according to attractiveness ranking according to an embodiment of the present disclosure;
Fig. 8 is a flowchart of a method for pushing information according to another embodiment of the present disclosure;
Fig. 9 is a schematic structural diagram of an apparatus for pushing information according to an embodiment of the present disclosure;
Fig. 10 is a schematic structural diagram of an apparatus for pushing information according to another embodiment of the present disclosure; and
Fig. 11 is a schematic structural diagram of an electronic device suitable for implementing embodiments of the present disclosure.

### DETAILED DESCRIPTION OF EMBODIMENTS

Embodiments of present disclosure will be described below in detail with reference to the accompanying drawings. It should be appreciated that the specific embodiments described herein are merely used for explaining the relevant disclosure, rather than limiting the disclosure. In addition, it should be noted that, for the ease of description, only the parts related to the relevant disclosure are shown in the accompanying drawings.

It should also be noted that the some embodiments in the present disclosure and some features in the disclosure may be combined with each other on a non-conflict basis. Features of the present disclosure will be described below in detail with reference to the accompanying drawings and in combination with embodiments.

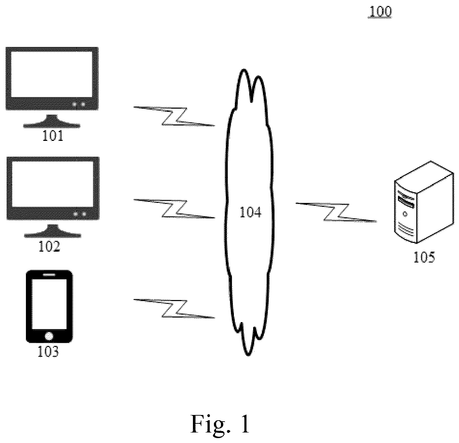

Fig. 1 illustrates an exemplary system architecture 100 of a method for pushing information or an apparatus for pushing information in which embodiments of the present disclosure may be implemented.

As shown in Fig. 1, the system architecture 100 may include terminal devices 101, 102, 103, a network 104, and a server 105. The network 104 is used to provide a communication link medium between the terminal devices 101, 102, 103 and the server 105. The network 104 may include various types of connections, usually may include wireless communication links, or the like.

The terminal devices 101, 102, 103 may interact with the server 105 through the network 104 to receive or send messages and so on. Various communication client applications, such as instant messaging tools, or email clients, may be installed on the terminal devices 101, 102, and 103.

The terminal devices 101, 102, 103 may be hardware or software. When the terminal devices 101, 102, 103 are hardware, they may be client terminals having communication and control functions. When the terminal devices 101, 102, 103 are software, they may be implemented as a plurality of software or software modules (for example, software or software modules for providing distributed services), or as a single software or software module, which is not specifically limited herein.

The server 105 may be a server that provides various services, for example, an application server that provides support for a map APP (application) on the terminal devices 101, 102, and 103. The application server may analyze and process relevant information of each terminal device in the network, and feed back a processing result (such as a map search strategy) to the terminal device.

It should be noted that the server may be hardware or software. When the server is hardware, it may be implemented as a distributed server cluster composed of a plurality of servers, or as a single server. When the server is software, it may be implemented as a plurality of software or software modules (for example, software or software modules for providing distributed services) or as a single software or software module, which is not specifically limited herein.

It should be noted that the method for pushing information provided by the embodiments of the present disclosure is generally performed by the server 105, and accordingly, the apparatus for pushing information is generally disposed in the server 105.

It should be understood that the number of terminal devices, networks and servers in Fig. 1 is merely illustrative. Depending on the implementation needs, there may be any number of terminal devices, networks and servers.

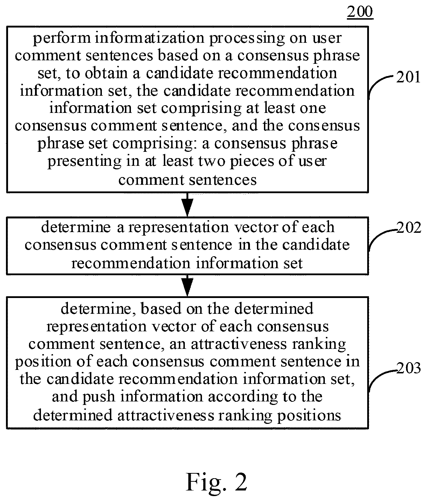

With further reference to Fig. 2, a flow 200 of a method for pushing information according to an embodiment of the present disclosure is illustrated. The method for pushing information includes the following steps:

Step 201, performing, based on a consensus phrase set, informatization processing on all user comment sentences to obtain a candidate recommendation information set, the candidate recommendation information set including at least one consensus comment sentence, and the consensus phrase set including: a consensus phrase presenting in at least two pieces of user comment sentences.

In the present embodiment, the user comment sentences are sentences by which the users evaluates products, articles, goods, and services after using the products, reading the articles, using the goods, and enjoying the services, etc. The user comment sentences include evaluative sentences such as effects after using, impression on the reading, or experiences during enjoying the service. In the present embodiment, carriers of the user comment sentences may be texts, voices, pictures, etc.

In a specific example, for different types of points of interest (POI for short), such as a map POI, a plurality of users may have a variety of different user experiences, but for a POI that is of interest to most users, it may have a feature that attracts most of the users. Therefore, when users evaluate this feature, user comment sentences for this POI may be obtained from the plurality of users.

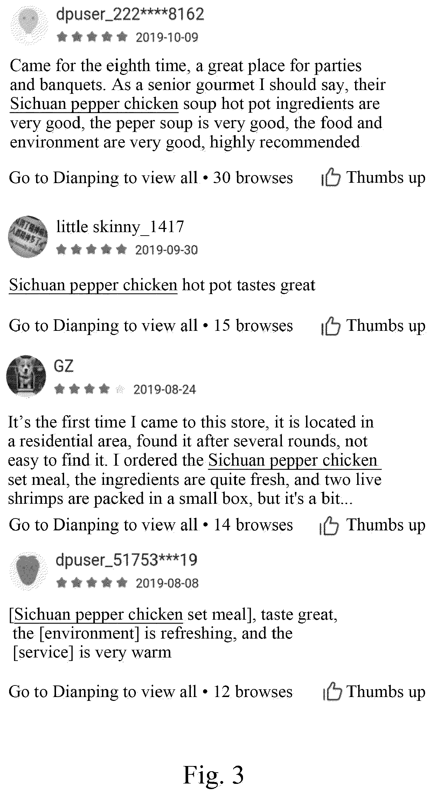

In the present embodiment, a phrase containing a feature of consensus comments of a plurality of users is called a consensus phrase. In order to extract the same or similar parts in comment contents of a plurality of user comment sentences to form an attractive comment sentence, it may start by extracting the consensus phrase first, and then obtaining a consensus sentence based on the consensus phrase. Furthermore, for a certain POI, the consensus phrase may be a feature project of the certain POI mentioned in a plurality of user comment sentences and a phrase describing the feature project. For example, projects of the food category that can be viewed by users on an APP include but are not limited to speciality, services and environment. As shown in Fig. 3, for the POI "Huajuyan (branch store at Xi'erqi)", its feature project "Sichuan pepper chicken" is mentioned in a plurality of user comment sentences of different users, and the content mentioned also includes description "great taste" of the feature project. In this regard, the consensus phrase for a certain POI may be obtained by mining the feature project commented by a large number of users for this certain POI and the description for the feature project of this certain POI.

In the present embodiment, in order to gather all consensus phrases in user comment sentences as many as possible, the concept of consensus phrase set is proposed. The consensus phrase set may be composed of one or more consensus phrases, and the consensus phrase set may be obtained by following manners: 1) forming the consensus phrase set with one or more preset consensus phrases. 2) extracting one or more consensus phrases from at least two user comment sentences to form the consensus phrase set. 3) extracting at least two consensus phrases from all of the user comment sentences, and sorting the extracted consensus phrases according to the number of presence in the user comment sentences, and forming the consensus phrase set with a preset number of consensus phrases which are of more frequently presence and thus sorted top in the sorting list. Here, the preset number may be set as required, for example, the set number is five. Therefore, for different user comment sentences and different POIs that the users pay attention to, corresponding consensus phrases may be found in the consensus phrase set, which provides convenience for mining the consensus sentence in the user comment sentences.

In the present embodiment, the consensus comment sentence, that is, the consensus sentence, may be composed of words, word groups, or phrases, and it includes at least one consensus phrase. The consensus comment sentence can express a complete meaning, such as telling someone something, asking a question, expressing a request or stop, expressing a certain emotion, or expressing continuation or omission of a passage. The consensus comment sentence for a POI is a complete sentence that may express the feature of the current POI. As shown in Fig. 3, for the POI "Huajuyan (branch store at Xi'erqi)", the consensus phrases include "Sichuan pepper chicken" and "great taste", and the consensus comment sentence including "Sichuan pepper chicken" and "great taste" is "Sichuan pepper chicken hot pot in this store has great taste".

In the present embodiment, informatization processing on all of the user comment sentences refers to a process of finding consensus comment sentences in all of the user comment sentences, and combining all of the found consensus comment sentences to form a candidate recommendation information set. The informatization processing includes but is not limited to sentence segmenting processing, sentence information filtering, sentence emotion filtering, etc. For example, the processing process first performs sentence segmentation on the user comment sentences to obtain consensus comment sentences containing consensus phrases, makes the consensus comment sentences short and easy to process; then, performs information filtering on the consensus comment sentences, only retains consensus comment sentences having actual values; continues to perform emotion orientation filtering on the consensus comment sentences having actual values, retains consensus comment sentences with positive and active emotion orientation, and finally combines all the consensus comment sentences with positive and active emotion orientation to obtain the candidate recommendation information set. In this regard, all the consensus comment sentences in the candidate recommendation information set may be used as candidate sentences for subsequent push information. Through the informatization processing on the user comment sentences, the consensus comment sentences may be quickly obtained, which provides convenience for pushing information to the user.

Step 202, determining a representation vector of each consensus comment sentence in the candidate recommendation information set.

Specifically, converting a sentence representation into a vector representation in semantic space is a common practice for quantifying and comparing semantics. Further, there are basically two aspects to convert a sentence into a sentence vector. The first aspect is to directly through a trained sentence vector model, by inputting the sentence into a trained sentence vector model to obtain the representation vector of the sentence. The second aspect is to start from the word level, word vectors in the sentence are added up and then averaged to obtain the sentence vector. Compared to the trained sentence vector model, the stability of obtaining the sentence vector based on word vector is better since the learning of the word vectors has semantic information. In the present embodiment, by determining the representation vector of each consensus comment sentence, consensus comment sentences having consistent semantic and grammatical attribute may be mapped to similar vector representations, making it easy to identify the information content amount in consensus comment sentences.

Step 203, determining an attractiveness ranking of each consensus comment sentence in the candidate recommendation information set based on the representation vector of each consensus comment sentence, and pushing information according to the attractiveness ranking.

In the present embodiment, an executing body (for example, the server 105 shown in Fig. 1) of the method for pushing information may push the information to a client terminal (for example, the terminal devices 101, 102, 103 shown in Fig. 1).

In the present embodiment, an attractiveness ranking mechanism is used to push information. The attractiveness ranking may refer to the ranking performed by the executing body based on scores of matching between the representation vectors of attractive phrases and the representation vector of each consensus comment sentence in the candidate recommendation information set. The representation vector of an attractive phrase may be encoded from a large amount of manually reviewed push information and then obtained by averaging. Alternatively, the representation vector of an attractive phrase may also be obtained by performing target prediction on a large number of candidate texts through a neural network-based text encoding classification model.

The method for pushing information provided by an embodiment of the present disclosure, by: first performing, based on a consensus phrase set, informatization processing on all user comment sentences to obtain a candidate recommendation information set, the candidate recommendation information set including at least one consensus comment sentence, and the consensus phrase set including: a consensus phrase presenting in at least two pieces of user comment sentences; then determining a representation vector of each consensus comment sentence in the candidate recommendation information set; and finally determining an attractiveness ranking position of each consensus comment sentence in the candidate recommendation information set based on the representation vector of each consensus comment sentence, and pushing information according to the attractiveness ranking positions. Therefore, the push information may be automatically extracted after processing based on the existing user comment sentences, without a large amount of supervision data for supervision, which saves the cost of data supervision, saves the cost of manual review, has high push efficiency, and improves user experience.

In some alternative implementations of the above embodiment, the push information may include a title of a hyperlink. A user clicks on the title of the hyperlink to access a detail page under the current title. Alternatively, the push information may also include presenting label including a text. The user clicks on the label to access a detail page corresponding to the current label.

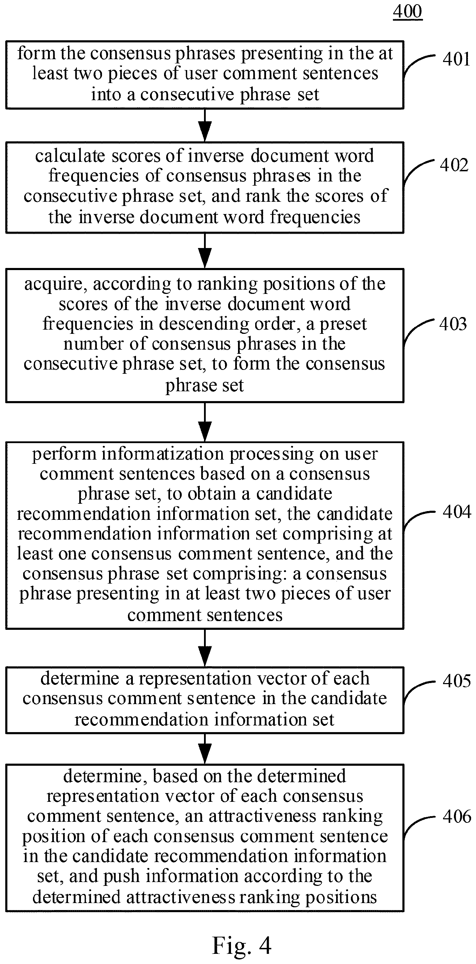

With further reference to Fig. 4, a flow 400 of a method for pushing information according to another embodiment of the present disclosure is illustrated. The method for pushing information includes the following steps:

Step 401, forming consensus phrases presenting in the at least two pieces of user comment sentences into a consecutive phrase set.

Specifically, consecutive character (or Chinese characters) strings presenting in the at least two user comment sentences may be used as a consensus phrase, and a plurality of consensus phrases form the consecutive phrase set. The consecutive phrase set is a combination of a plurality of consensus phrases with indefinite part-of-speech. The consensus phrases in the consecutive phrase set may include some phrases that have no actual value, such as "very good" and "excellent". Therefore, compared with the consensus phrases in the consensus phrase set, the consensus phrases in the consecutive phrase set need to be refined. For different POI, the consensus phrases in the consecutive phrase set may cover a variety of contents. For example, for a POI of food category, the consensus phrases in the consecutive phrase set may include names of a speciality, feature service project, eye-catching environment layouts, common experience of customers, etc.

Step 402, calculating scores of inverse document word frequencies of consensus phrases in the consecutive phrase set, and ranking all of the scores of the inverse document word frequencies.

Specifically, while a consensus phrase in the consecutive phrase set cover the feature information of the current POI, it may also include some text description such as "delicious dishes" and "good service" that other POIs also have. In order to ensure that the subsequent pushed information reflects the feature information of the current POI and is representative of the current POI, the scores of the inverse document word frequencies of the consensus phrases in the consecutive phrase set are calculated, and all of the scores of the inverse document word frequencies are ranked. The ranking may be performed according to a sorting method such as in ascending order or descending order.

Step 403, acquiring, according to the ranking of the scores of the inverse document word frequencies in descending order, a preset number of consensus phrases in the consecutive phrase set, to form the consensus phrase set.

In this step, the value of the preset number may be obtained by investigating part of the consensus phrases included in manually reviewed push information of POIs. According to the investigation, in the consensus phrases contained in the manually reviewed push information, the consensus phrases ranked at the top 65% of scores of the inverse document word frequencies in all of the consensus phrases for a current POI may achieve a recall rate of 90%. Therefore, for the consecutive phrase set under the current POI, the highest 35% of the inverse document word frequencies of the consensus phrases in this consecutive phrase set may be removed, to form the final consensus phrase set. The method for forming the consensus phrase set in the present embodiment avoids the interference of individual extreme comments, and at the same time can effectively extract feature information worthy of attention.

Step 404, performing, based on the consensus phrase set, informatization processing on all of the user comment sentences to obtain a candidate recommendation information set, the candidate recommendation information set including at least one consensus comment sentence, and the consensus phrase set including: consensus phrases presenting in at least two pieces of user comment sentences.

Step 405, determining a representation vector of each consensus comment sentence in the candidate recommendation information set.

Step 406, determining an attractiveness ranking position of each consensus comment sentence in the candidate recommendation information set based on the representation vector of each consensus comment sentence, and pushing information according to the attractiveness ranking.

In the embodiment shown in Fig. 4, the consensus phrases presenting in at least two user comment sentences are formed into a consecutive phrase set, the scores of the inverse document word frequencies of the consensus phrases in the continuous phrase set are calculated, and the scores of the inverse document word frequencies are ranked, then based on the ranking of scores of the inverse document word frequencies in descending order, a preset number of consensus phrases in the consecutive phrase set are acquired to form the consensus phrase set, so as to realize purification of the consecutive phrase set and ensure that a consensus phrase set with reliable feature information may be obtained.

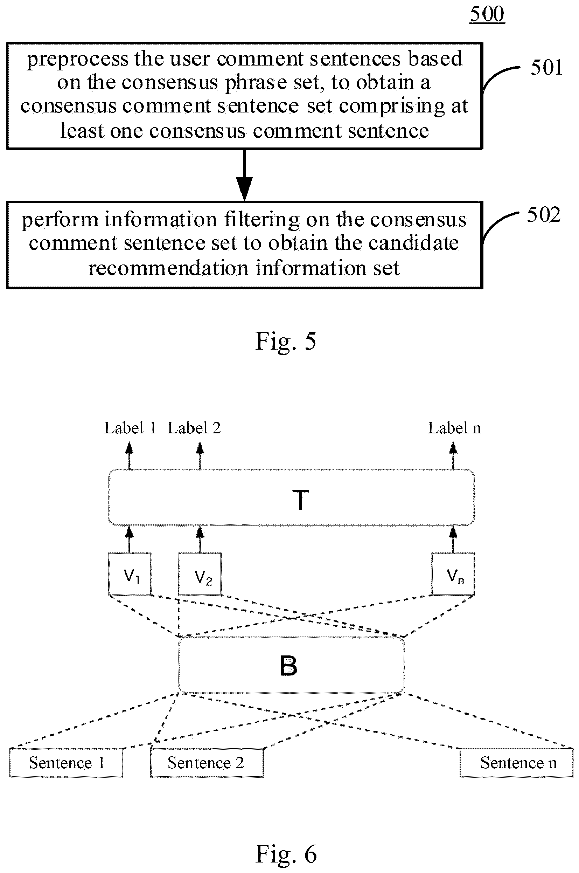

In order to obtain a more reliable candidate recommendation information set, in some alternative implementations of the present embodiment, with further reference to Fig. 5, the performing, based on the consensus phrase set, informatization processing on all of user comment sentences to obtain a candidate recommendation information set, may be performed according to the following process:

Step 501, preprocessing, based on the consensus phrase set, all of the user comment sentences to obtain a consensus comment sentence set including at least one consensus comment sentence.

In the present embodiment, the user comment sentences may be preprocessed to form the user comment sentences into a consensus comment sentence set including at least one consensus comment sentence in a sentence form required by a customer, and the sentence forms required by customers may be different for different customers. For example, the customer required sentence form of the consensus comment sentences in the consensus comment sentence set is: the consensus comment sentence includes at least one number, five Chinese characters, etc.

Alternatively, the preprocessing includes: word segmentation, sentence segmentation, text cleaning, text classification, standardization, etc. Due to the particularity of a language, the manners of word segmentation for sentences in different languages are different. In terms of word segmentation, in English, spaces may be directly used to segment words. In Chinese, because the grammar is more complicated, a tokenizer may be used to perform the word segmentation. The principle of sentence segmentation is similar to that of word segmentation. Typically, there are many useless parts in user comment sentences, such as unnecessary punctuations, or stop words, and we need to clean them step by step. Some commonly used text cleaning methods include: removing punctuations; converting English to lowercase; performing normalization on numbers; and stop-words thesaurus/low-frequency words thesaurus, deleting words that have intersection with thesauruses from the user comment sentences after acquiring the stop-words thesaurus and the low-frequency words thesaurus.

In some alternative implementations of the present embodiment, the preprocessing, based on the consensus phrase set, all of the user comment sentences to obtain a consensus comment sentence set including at least one consensus comment sentence, includes: performing sentence segmentation on all of the user comment sentences to obtain comment sentences subjected to the sentence segmentation, and lengths of the obtained comment sentences subjected to the sentence segmentation is within a predetermined number of Chinese characters; determining at least one consensus comment sentence in the comment sentences subjected to the sentence segmentation, the determined consensus comment sentence includes a consensus phrase in the consensus phrase set; and performing emotion orientation filtering on all of the consensus comment sentences to obtain the consensus comment sentence set.

In this alternative implementation, the preset number may be set according to customer requirements. For example, for a plurality of user comments on a certain POI of food category, first, sentence segmentation is performed on all of the user comment sentences, so that the length of the comment sentences after the sentence segmentation is within 20 Chinese characters. Then, comment sentences after the sentence segmentation that do not contain a consensus phrase included in the consensus phrase set are removed, so that the comment sentences retained after the sentence segmentation contain at least one consensus phrase.

In this alternative implementation, by performing sentence segmentation on all of the user comment sentences, the user comment sentences may be shortened, so that the push information pushed to the user is short, and user experience is improved. Furthermore, all of the retained consensus comment sentences need to be subjected to emotion orientation filtering to find consensus comment sentences of positive emotions, and the emotion orientation filtering performed on the consensus comment sentences may use an emotion analysis language processing library to perform emotion analysis on the consensus comment sentences, to obtain the consensus comment sentences of positive emotions, in order to avoid a text of negative emotion that does not meet the recommendation scenario. So that the pushed information may have more positive emotional factors and provide users with positive interest guidance.

Step 502, performing information filtering on the consensus comment sentence set to obtain the candidate recommendation information set.

In the present embodiment, the performing information filtering on the consensus comment sentence set may be based on user's information needs, using certain standards and technologies to filter information irrelevant to the user from the consensus comment sentence set, and provide information that meets the user's needs to the user, thereby reducing the user's cognitive burden and improving the efficiency of information acquisition of the user.

In some alternative implementations of the present embodiment, the performing information filtering on the consensus comment sentence set to obtain the candidate recommendation information set, includes: comparing, one by one, words in the consensus comment sentence set with words in a negative sample set of a preset filtering word list; determining, based on the results of comparing, all of consensus comment sentences filtered by the preset filtering word list; and obtaining the candidate recommendation information set based on the consensus comment sentences filtered by the preset filtering word list. In this alternative implementation, the preset filtering word list contains a large number of simple descriptions. Since too simple descriptions of the features of the POIs are not enough to attract people, the preset filtering word list may exclude too simple descriptions from the consensus comment sentence set. That is, as long as the words constituting a consensus comment sentence overlaps with the preset filtering word list, the information content amount included in the sentence is too little to constitute attractive push information and thus the sentence is filtered, which improves the reliability of information filtering.

Alternatively, the obtaining the candidate recommendation information set based on all of the consensus comment sentences filtered by the preset filtering word list, includes: constructing the candidate recommendation information set based on all of the consensus comment sentences which are filtered by the preset filtering word list and do not contain words in the negative sample set of the preset filtering word list.

In some alternative implementations of the present embodiment, the obtaining the candidate recommendation information set based on all of the consensus comment sentences filtered by the preset filtering word list, includes:

inputting all of the consensus comment sentences filtered by the preset filtering word list into a trained recommendation information model, to obtain the candidate recommendation information set output by the trained recommendation information model, the trained recommendation information model being obtained by training with positive samples and the negative sample set included in the preset filtering word list.

Specifically, first, a preset filtering word list is constructed manually, and sentences containing vocabulary in the word list are labeled as insufficient in information and as negative samples, while the rest are labeled as positive samples, and thus training data are constructed for training, so that the model learns to determine which sentences meet the information content amount requirement and which do not meet the information content amount requirement based on the plurality of given sentences. Based on the positive samples and the negative sample set in the preset filtering word list, the trained recommendation information model is obtained by training as follows: separating the positive sample set and the negative sample set included in the preset filtering word list; with the positive sample set and the negative sample set as inputs, and with the candidate recommendation information set labeled in the positive sample set as an expected output, training an initial recommendation information model to obtain the trained recommendation information model. The trained recommendation information model may be a neural network model.

As shown in Fig. 6, a schematic structural diagram of a trained recommendation information model according to an embodiment of the present disclosure is illustrated. This trained recommendation information model may transform the problem of identifying information amount of a plurality of sentences for the current POI into a multi-sentence sequence labeling task. Specifically, an input of the model includes n (n>1) intercepted sentences for a certain POI. Each sentence passes through a sentence encoder B, to obtain an encode representation vector Vₙ (n>1) of d dimensions. The encoder B may adopt a BERT (bidirectional encoder representation from transformers, transformer's bidirectional encoder). Considering that the judgment of whether a sentence is sufficient to meet the standard of information content amount not only requires semantic information of the sentence, but also requires comprehensive consideration in combination with other comment information. To this end, n encode representation vectors are transferred as a sequence to a multi-layer bidirectional sequence interactive encoder T. Finally, the multi-layer bidirectional sequence interactive encoder T outputs a label at each time step, and each label represents whether the sentence at the corresponding position has information content amount, thereby realizing judgment on the sentence information content amount by the trained recommendation information model.

In this implementation, the sentence encoder B may be used to encode semantics of a consensus comment sentence in the candidate recommendation information set into a dense vector, that is, the representation vector of the consensus comment sentence. The sentence encoder B may also be replaced by other encoding models, such as ERNIE Model (enhanced representation from knowledge integration). Compared to BERT, ERNIE model learns the semantic representation of complete concepts by modeling priori semantic knowledge such as entity concepts in massive data. That is, the model is pre-trained by masking the semantic units such as words and entity concepts, so that the model's representations of semantic knowledge units are closer to the real world.

In this alternative implementation, in view of the limitation of the manually constructed preset filtering word list, the trained recommendation information model, which is trained based on positive samples and negative samples filtered based on the preset filtering word list, is used to obtain the candidate recommendation information set, which improves the robustness of information content amount identification.

In some alternative implementations of the present embodiment, the performing information filtering on the consensus comment sentence set to obtain the candidate recommendation information set, includes: inputting the consensus comment sentence set into a trained recommendation information model, to obtain the candidate recommendation information set output by the trained recommendation information model, the trained recommendation information model being obtained by training with positive samples and the negative sample set included in the preset filtering word list.

In this alternative implementation, the consensus comment sentence set is input into the neural network model which is directly trained by using positive samples and negative samples filtered based on the preset filtering word list, to obtain the candidate recommendation information set, and thus improves the reliability on identifying the information amount, and provides an alternative implementation for performing information filtering on the consensus comment sentence set.

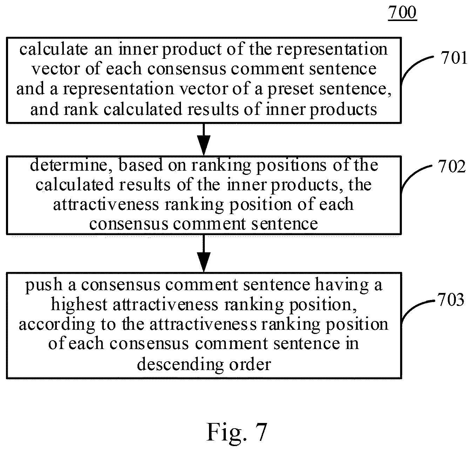

In some alternative implementations of the present embodiment, with further reference to Fig. 7, the determining an attractiveness ranking position of each consensus comment sentence in the candidate recommendation information set based on the representation vector of each consensus comment sentence, and pushing information according to the attractiveness ranking may be performed according to the following process:

Step 701, calculating an inner product of the representation vector of each consensus comment sentence and the representation vector of a preset sentence, and ranking all inner product results.

In the present embodiment, the process of obtaining the representation vector of the preset sentence is as follows: selecting 1000 pieces of manually reviewed push information, and encoding the 1000 pieces of push information using a pre-trained text representation model to obtain 1000 sentence representation vectors. The obtained 1000 sentence representation vectors are averaged to obtain the representation vector of the preset sentence. Of course, the push information is not limited to 1000 pieces, and the more manually reviewed push information selected, the higher the accuracy of the obtained representation vector of the preset sentence. This calculating the average method dilutes information of a specific POI reflected in manually reviewed push information, and retains attractive semantic information and commonality of the push information.

Step 702, determining the attractiveness ranking position of each consensus comment sentence, based on ranking positions of all of the inner product results.

In the present embodiment, the inner product of vectors is defined as the scalar product of the vectors. The result of the inner product of two vectors is a scalar. The scalar is also called "no vector", which has only numerical magnitude and no direction. Calculating the inner product of the representation vector of the preset sentence and the representation vector of each consensus comment sentence in the candidate recommendation information set for the current POI. The higher the scalar product obtained, the more attractive the candidate push information is.

Step 703, pushing a consensus comment sentence having the highest attractiveness ranking position, according to the attractiveness ranking position of each consensus comment sentence in descending order.

In the present embodiment, the higher the inner product result, the more attractive the candidate push information is. At the same time, it also means that the consensus comment sentence corresponding to the inner product result is more attractive, and finally the consensus comment sentence having the highest inner product result is selected for presentation.

Since attractive recommendation information has language commonality, this alternative implementation may encode a large amount of manually reviewed recommendation information and calculate an average, to obtain the most accurate vector representation which is suitable to be used as the recommendation reason. Then, when it is compared with the vector representation of a recalled candidate sentence, the candidate sentence that best matches the customer requirements may be obtained, which provides a basis for obtaining most attractive push information.

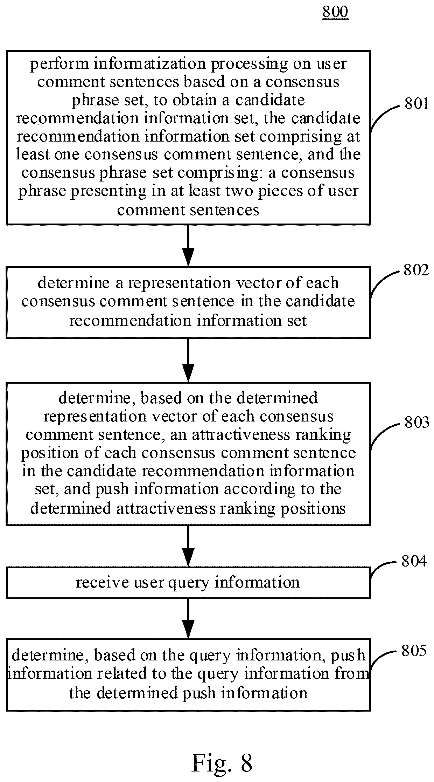

With further reference to Fig. 8, a flowchart 800 of a method for pushing information according to another embodiment is illustrated. The method for pushing information includes the following steps:

Step 801, performing, based on a consensus phrase set, informatization processing on all user comment sentences to obtain a candidate recommendation information set, the candidate recommendation information set including at least one consensus comment sentence, and the consensus phrase set including: a consensus phrase presenting in at least two pieces of user comment sentences.

Step 802, determining a representation vector of each consensus comment sentence in the candidate recommendation information set.

Step 803, determining an attractiveness ranking position of each consensus comment sentence in the candidate recommendation information set based on the representation vector of each consensus comment sentence, and pushing information according to the attractiveness ranking.

Step 804, receiving user query information.

In the present embodiment, the user query information is the key information for the user to access the user comment sentences. Once the executing body obtains the query information, it may push information targeting at the query information. Specifically, the query information may be operation information that the user acts on the client. For example, at any time and location, a user may scroll down to view the POIs of the food perpendicular category recommended therefor under a "selected food" function of a map APP; alternatively, the query information may also be POI information entered into a client terminal by the user. For example, the user enters "Huajuyan (branch store at Xi'erqi)" under the "selected food" function of the map APP.

Step 805, determining, based on the query information, push information related to the query information from the determined push information.

In the present embodiment, the determined push information refers to all of the push information determined in step 803.

The above steps 801 to 803 may all be performed by the executing body offline, while steps 804 to 805 are to online determine, based on the user query information, all of the push information related to the query information in the generated push information.

The method for pushing information provided in the present embodiment determines all of the push information related to the query information after receiving the user query information, which facilitates timely providing to the customer the push information required by the customer and improves user experience.

In some alternative implementations of the present embodiment, after receiving the user query information, the executing body may also first determine all of the user comment sentences related to the query information. For example, if a user slides down to view a certain POI on the client terminal, the executing body directly displays all of the user comment sentences for the current POI. For example, a user once checked the POI "Huajuyan (branch store at Xi'erqi)" of the food perpendicular category which is recommended for him. The results displayed by the executing body on the client terminal include 57 pieces of user comments for the POI "Huajuyan (branch store at Xi'erqi)".

Secondly, based on the consensus phrase set, informatization processing are performed on all of the user comment sentences to obtain the candidate recommendation information set. The candidate recommendation information set includes at least one consensus comment sentence, and the consensus phrase set includes: a consensus phrase presenting in at least two pieces of user comment sentences.

Finally, the representation vector of each consensus comment sentence in the candidate recommendation information set is determined. Finally, based on the representation vector of each consensus comment sentence, the attractiveness ranking position of each consensus comment sentence in the candidate recommendation information set is determined, and push information related to the query information is pushed according to the attractiveness ranking.

A specific implementation of the present embodiment is as follows: at any time and location, under a "selected food" function of a map APP a user may scroll down to view the POIs of the food perpendicular category that are recommended to him/her. The displayed results include an attractive title and a representative picture of the POI. The title does not exceed 20 characters. The source of the title and the picture is a user comment of high quality. If the user is attracted by the recommendation reason or picture, he/she may click on the displayed results to access detailed content of the source, that is, the user comment of high quality, and may further click to enter a detail page of the POI.

For example, a user once checked the POI "Huajuyan (branch store at Xi'erqi)" in nearby food restaurant recommended to him/her. The displayed results include 57 pieces of user comments on the POI "Huajuyan (branch store at Xi'erqi)". Attractive push information "their Sichuan pepper chicken hot pot tastes very fresh, and the hand-made balls have great mouthfeel" is generated offline, and the push information, used as the title of a hyperlink, and is displayed together with a high-quality picture of the source comment corresponding to the title. The user may click on this title to view detailed comment information from which the current push information originate from, and further access a detail page of the POI to complete the navigation.

The method for pushing information provided by embodiments of the present disclosure may automatically generate push information having high information amount, high attractiveness, positive emotion, and consensus information based on comment sentences targeting at a certain POI. This push information is very brief and suitable for displaying on a mobile terminal. While reflecting feature information of the POI, it is attractive enough to enhance user experience. At the same time, the automatically generated push information eliminates the time and wage costs of manual writing, and improves the efficiency and quality of push information generation. In addition, since training with supervised data is not required, a deployment cost is further reduced, and the uncertainty of a black box model during end-to-end supervised training is also reduced.

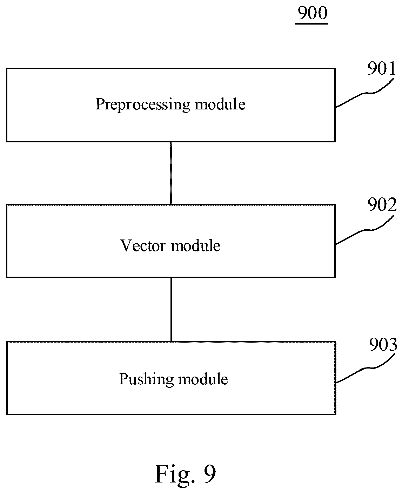

With further reference to Fig. 9, as an implementation of the method shown in the above figures, the present disclosure provides an apparatus for pushing information, and the apparatus embodiment corresponds to the method embodiment as shown in Fig. 2, and the apparatus may be specifically applied to various electronic devices.

As shown in Fig. 9, an apparatus 900 for pushing information provided in the present embodiment includes: a preprocessing module 901, a vector module 902 and a pushing module 903. The preprocessing module 901 may be configured to perform informatization processing on all of user comment sentences based on a consensus phrase set, to obtain a candidate recommendation information set, the candidate recommendation information set comprising at least one consensus comment sentence, and the consensus phrase set comprising: a consensus phrase presenting in at least two pieces of user comment sentences. The vector module 902 may be configured to determine a representation vector of each consensus comment sentence in the candidate recommendation information set. The pushing module 903 may be configured to determine, based on the determined representation vector of each consensus comment sentence, an attractiveness ranking position of each consensus comment sentence in the candidate recommendation information set, and pushing information according to the determined attractiveness ranking positions.

In the present embodiment, the specific processing and the technical effects brought by the preprocessing module 901, the vector module 902, and the pushing module 903 in the apparatus 900 for pushing information may refer to the related descriptions of step 201, step 202, and step 203 in the corresponding embodiment of Fig. 2, respectively, and detailed description thereof will be omitted herein.

In some alternative implementations of the present embodiment, the pushing module may include an inner product ranking unit (not shown in the figure), an attractiveness ranking unit (not shown in the figure) and a pushing unit (not shown in the figure). The inner product ranking unit may be configured to calculate an inner product of the representation vector of each consensus comment sentence and a representation vector of a preset sentence, and rank calculated results of inner products. The attractiveness ranking unit may be configured to determine, based on ranking positions of the calculated results of the inner products, the attractiveness ranking position of each consensus comment sentence. The pushing unit may be configured to push a consensus comment sentence having a highest attractiveness ranking position, according to the attractiveness ranking position of each consensus comment sentence in descending order.

In some alternative implementations of the present embodiment, the preprocessing module may include: a preprocessing unit (not shown in the figure) and a filtering unit (not shown in the figure). The preprocessing unit may be configured to preprocess, based on the consensus phrase set, all of the user comment sentences, to obtain a consensus comment sentence set comprising at least one consensus comment sentence. The filtering unit may be configured to perform information filtering on the consensus comment sentence set to obtain the candidate recommendation information set.

In some alternative implementations of the present embodiment, the filtering unit may include: a comparison subunit (not shown in the figure), a determination subunit (not shown in the figure) and a recommendation subunit (not shown in the figure). The comparison subunit may be configured to compare, one by one, words in the consensus comment sentence set with words in a negative sample set of a preset filtering word list. The determination subunit may be configured to determine, based on results of the comparing, all of consensus comment sentences filtered by the preset filtering word list. The recommendation subunit may be configured to obtain the candidate recommendation information set based on the consensus comment sentences filtered by the preset filtering word list.

In some alternative implementations of the present embodiment, the filtering unit may include: an input subunit (not shown in the figure) and an output subunit (not shown in the figure). The input subunit may be configured to input the consensus comment sentences filtered by the preset filtering word list into a trained recommendation information model. The output subunit may be configured to obtain the candidate recommendation information set output by the trained recommendation information model; and the trained recommendation information model being obtained by training with positive samples and the negative sample set in the preset filtering word list.

In some alternative implementations of the present embodiment, the preprocessing unit may include: a sentence segmentation subunit (not shown in the figure), a consensus subunit (not shown in the figure) and a filtering subunit (not shown in the figure). The sentence segmentation subunit may be configured to perform sentence segmentation on all of the user comment sentences to obtain comment sentences after the sentence segmentation, and lengths of the comment sentences after the sentence segmentation being within a predetermined number of Chinese characters. The consensus subunit may be configured to determine, in the comment sentences after the sentence segmentation, at least one consensus comment sentence, the consensus comment sentence comprising a consensus phrase in the consensus phrase set. The filtering subunit may be configured to perform emotion orientation filtering on all of the consensus comment sentences, to obtain the consensus comment sentence set.

The apparatus provided by the above embodiment of the present disclosure, the preprocessing module 901 performs informatization processing on all of user comment sentences based on a consensus phrase set, to obtain a candidate recommendation information set, the candidate recommendation information set comprising at least one consensus comment sentence, and the consensus phrase set comprising: a consensus phrase presenting in at least two pieces of user comment sentences. The vector module 902 determines a representation vector of each consensus comment sentence in the candidate recommendation information set. The pushing module 903 determines, based on the determined representation vector of each consensus comment sentence, an attractiveness ranking position of each consensus comment sentence in the candidate recommendation information set, and pushing information according to the determined attractiveness ranking positions. Therefore, the push information may be automatically extracted after processing the existing user comment sentences, without a large amount of supervision data for supervision, which saves the cost of data supervision, saves the cost of manual review, has high push efficiency, and improves user experience.

In some alternative implementations of the present embodiment, the apparatus for pushing information may further include: a phrase forming module (not shown in the figure), a calculation module (not shown in the figure), a word frequency ranking module (not shown in the figure) and an acquisition module (not shown in the figure). The phrase forming module may be configured to form the consensus phrases presenting in the at least two pieces of user comment sentences into a consecutive phrase set. The calculation module may be configured to calculate scores of inverse document word frequencies of consensus phrases in the consecutive phrase set. The word frequency ranking module may be configured to rank the scores of the inverse document word frequencies. The acquisition module may be configured to acquire, according to ranking positions of the scores of the inverse document word frequencies in descending order, a preset number of consensus phrases in the consecutive phrase set, to form the consensus phrase set.

In the present alternative implementation, first the phrase forming module forms the consensus phrase presenting in the at least two pieces of user comment sentences into the consecutive phrase set, next the calculation module calculates scores of inverse document word frequencies of consensus phrases in the consecutive phrase set, then the word frequency ranking module ranks the scores of the inverse document word frequencies, and finally the acquisition module acquires, according to ranking positions of the scores of the inverse document word frequencies in descending order, a preset number of consensus phrases in the consecutive phrase set, to form the consensus phrase set, so as to realize purification of the consecutive phrase set and ensure that a consensus phrase set with reliable feature information may be obtained.

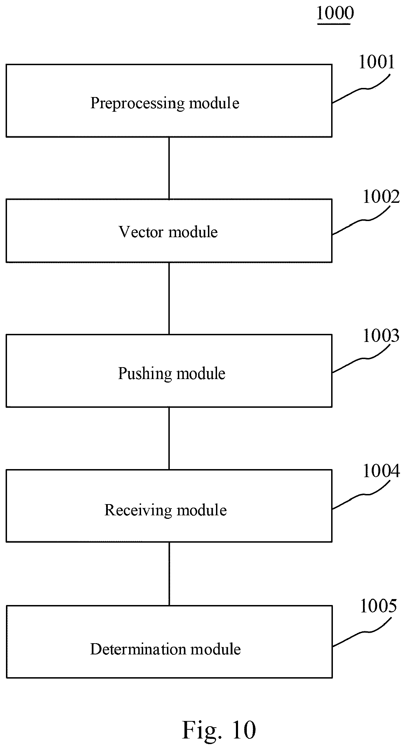

With further reference to Fig. 10, as an implementation of the method shown in Fig. 8, the present disclosure provides another embodiment of the apparatus for pushing information, and the apparatus embodiment corresponds to the method embodiment as shown in Fig. 8, and the apparatus may be specifically applied to various electronic devices.

As shown in Fig. 10, an apparatus 1000 for pushing information provided in the present embodiment includes: a preprocessing module 1001, a vector module 1002, a pushing module 1003, a receiving module 1004 and a determination module 1005. The preprocessing module 1001 may be configured to perform informatization processing on user comment sentences based on a consensus phrase set, to obtain a candidate recommendation information set, the candidate recommendation information set comprising at least one consensus comment sentence, and the consensus phrase set comprising: a consensus phrase presenting in at least two pieces of user comment sentences. The vector module 1002 may be configured to determine a representation vector of each consensus comment sentence in the candidate recommendation information set. The pushing module 1003 may be configured to determine, based on the determined representation vector of each consensus comment sentence, an attractiveness ranking position of each consensus comment sentence in the candidate recommendation information set, and pushing information according to the determined attractiveness ranking positions. The receiving module 1004 may be configured to receive user query information. The determination module 1005 may be configured to determine, from push information determined by the method for pushing information according to any one of claims 1-8, push information related to the query information based on the query information, the push information comprising a title of a hyperlink.

The apparatus for pushing information provided by the above embodiment of the present disclosure, first the preprocessing module 1001 performs informatization processing on user comment sentences based on a consensus phrase set, to obtain a candidate recommendation information set, the candidate recommendation information set comprising at least one consensus comment sentence, and the consensus phrase set comprising: a consensus phrase presenting in at least two pieces of user comment sentences. Next the vector module 1002 determines a representation vector of each consensus comment sentence in the candidate recommendation information set. Then the pushing module 1003 determines, based on the determined representation vector of each consensus comment sentence, an attractiveness ranking position of each consensus comment sentence in the candidate recommendation information set, and pushing information according to the determined attractiveness ranking positions. Then the receiving module 1004 receives user query information. Finally, the determination module 1005 determines push information related to the query information based on the query information. Thus, the apparatus may automatically generate push information having high information amount, high attractiveness, positive emotion, and consensus information based on comment sentences for a POI. The generated push information is very brief and suitable for displaying on a mobile terminal. While reflecting feature information of the POI, it is attractive enough to enhance user experience. At the same time, the automatically generated push information eliminates the time and wage costs of manual writing, and improves the efficiency in generating the push information and the quality thereof. In addition, since training with supervised data is not required, a deployment cost is further reduced, and the uncertainty of a black box model during end-to-end supervised training is also reduced.

According to an embodiment of the present disclosure, an electronic device and a readable storage medium are provided.

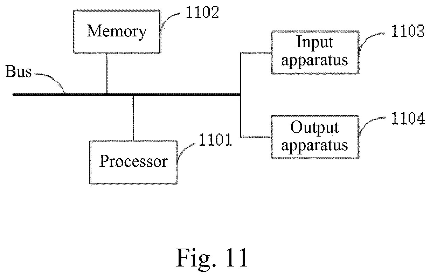

As shown in Fig. 11, illustrated is a block diagram of an electronic device of the method for pushing information according to an embodiment of the present disclosure. The electronic device is intended to represent various forms of digital computers, such as laptop computers, desktop computers, workbenches, personal digital assistants, servers, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit implementations of the present disclosure described and/or claimed herein.

As shown in Fig. 11, the electronic device includes: one or more processors 1101, a memory 1102, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and the devices provide some necessary operations (for example, as a server array, a set of blade servers, or a multi-processor system). In Fig. 11, one processor 1101 is used as an example.

The memory 1102 is a non-transitory computer readable storage medium provided by embodiments of the present disclosure. The memory stores instructions executable by at least one processor, so that the at least one processor performs the method for pushing information provided by embodiments of the present disclosure. The non-transitory computer readable storage medium of the present disclosure stores computer instructions for causing a computer to perform the method for pushing information provided by embodiments of the present disclosure.

The memory 1102, as a non-transitory computer readable storage medium, may be used to store non-transitory software programs, non-transitory computer executable programs and modules, such as program instructions/modules corresponding to the method for pushing information in embodiments of the present disclosure (for example, the preprocessing module 901, the vector module 902 and the pushing module 903 as shown in Fig. 9. The processor 1101 executes the non-transitory software programs, instructions, and modules stored in the memory 1102 to execute various functional applications and data processing of the server, that is, to implement the method for pushing information in the foregoing method embodiments.

The memory 1102 may include a storage program area and a storage data area, where the storage program area may store an operating system and at least one function required application program; and the storage data area may store data created by the use of the electronic device for pushing information, etc. In addition, the memory 1102 may include a high-speed random access memory, and may also include a non-transitory memory, such as at least one magnetic disk storage device, a flash memory device, or other non-transitory solid-state storage devices. In some embodiments, the memory 1102 may optionally include memories remotely provided with respect to the processor 1101, and these remote memories may be connected to the electronic device for pushing information through a network. Examples of the above network include but are not limited to the Internet, intranet, local area network, mobile communication network, and combinations thereof.

The electronic device of the method for pushing information may further include: an input apparatus 1103 and an output apparatus 1104. The processor 1101, the memory 1102, the input apparatus 1103, and the output apparatus 1104 may be connected through a bus or in other methods. In Fig. 11, connection through a bus is used as an example.

The input apparatus 1103 may receive input digital or character information, and generate key signal inputs related to user settings and function control of the electronic device for pushing information, such as touch screen, keypad, mouse, trackpad, touchpad, pointing stick, one or more mouse buttons, trackball, joystick and other input apparatuses. The output apparatus 1104 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, and the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area network (LAN), wide area network (WAN), and the Internet.

The computer system may include a client and a server. The client and the server are generally far from each other and usually interact through the communication network. The relationship between the client and the server is generated by computer programs that run on the corresponding computer and have a client-server relationship with each other.

According to the technical solution of embodiments of the present disclosure, it may automatically generate push information having high information amount, high attractiveness, positive emotion, and consensus information based on comment sentences for a POI. The generated push information is very brief and suitable for displaying on a mobile terminal. While reflecting feature information of the POI, it is attractive enough to enhance user experience. At the same time, the automatically generated push information eliminates the time and wage costs of manual writing, and improves the efficiency in generating the push information and the quality thereof. In addition, since training with supervised data is not required, a deployment cost is further reduced, and the uncertainty of a black box model during end-to-end supervised training is also reduced.

It should be understood that, based on the various forms of processes shown above, the steps may be reordered, added, or deleted. For example, the steps described in embodiments of the present disclosure may be executed in parallel, in sequence or in different orders, there is no limitation herein as long as the expected results of the technical solution disclosed in embodiments of the present application could be realized.

The above embodiments don't constitute a restriction on the protection scope of the present disclosure. It should be understood by those skilled in the art that various modifications, combinations, sub combinations and substitutions may be made according to design requirements and other factors. Any modification, equivalent replacement and improvement made within the spirit and principles of the present disclosure shall be included in the protection scope of the present disclosure.

## Claims

1. A method for pushing information, the method comprising:
performing (201, 404, 801) informatization processing on user comment sentences based on a consensus phrase set, to obtain a candidate recommendation information set, the candidate recommendation information set comprising at least one consensus comment sentence, and the consensus phrase set comprising: a consensus phrase presenting in at least two pieces of user comment sentences;
determining (202, 405, 802) a representation vector of each consensus comment sentence in the candidate recommendation information set; and
determining (203, 406, 803), based on the determined representation vector of each consensus comment sentence, an attractiveness ranking position of each consensus comment sentence in the candidate recommendation information set, and pushing information according to the determined attractiveness ranking positions.

2. The method according to claim 1, wherein the determining (203), based on the determined representation vector of each consensus comment sentence, the attractiveness ranking position of each consensus comment sentence in the candidate recommendation information, and pushing information according to the determined attractiveness ranking positions, comprises:
calculating (701) an inner product of the representation vector of each consensus comment sentence and a representation vector of a preset sentence, and ranking calculated results of inner products;
determining (702), based on ranking positions of the calculated results of the inner products, the attractiveness ranking position of each consensus comment sentence; and
pushing (703) a consensus comment sentence having a highest attractiveness ranking position, according to the attractiveness ranking position of each consensus comment sentence in descending order.

3. The method according to claim 1, wherein the performing (201) informatization processing on the user comment sentences based on the consensus phrase set, to obtain the candidate recommendation information set, comprises:
preprocessing (501) the user comment sentences based on the consensus phrase set, to obtain a consensus comment sentence set comprising at least one consensus comment sentence; and
performing (502) information filtering on the consensus comment sentence set to obtain the candidate recommendation information set.

4. The method according to claim 3, wherein the performing (502) information filtering on the consensus comment sentence set to obtain the candidate recommendation information set, comprises:
comparing, one by one, words in the consensus comment sentence set with words in a negative sample set of a preset filtering word list;
determining, based on results of the comparing, consensus comment sentences filtered by the preset filtering word list; and
obtaining the candidate recommendation information set based on the consensus comment sentences filtered by the preset filtering word list.

5. The method according to claim 4, wherein the obtaining the candidate recommendation information set based on the consensus comment sentences filtered by the preset filtering word list, comprises:
inputting the consensus comment sentences filtered by the preset filtering word list into a trained recommendation information model, to obtain the candidate recommendation information set output by the trained recommendation information model, the trained recommendation information model being obtained by training with positive samples and the negative sample set in the preset filtering word list.

6. The method according to claim 3, wherein the performing (502) information filtering on the consensus comment sentence set to obtain the candidate recommendation information set, comprises:
inputting the consensus comment sentence set into a trained recommendation information model, to obtain the candidate recommendation information set output by the trained recommendation information model, the trained recommendation information model being obtained by training with positive samples and the negative sample set in the preset filtering word list.

7. The method according to any one of claims 3-6, wherein the preprocessing (501), based on the consensus phrase set, the user comment sentences, to obtain the consensus comment sentence set comprising at least one consensus comment sentence, comprises:
performing sentence segmentation on the user comment sentences to obtain comment sentences after the sentence segmentation, and lengths of the comment sentences after the sentence segmentation being within a predetermined number of Chinese characters;
determining, in the comment sentences after the sentence segmentation, at least one consensus comment sentence, the consensus comment sentence comprising a consensus phrase in the consensus phrase set; and
performing emotion orientation filtering on the consensus comment sentences, to obtain the consensus comment sentence set.

8. The method according to any one of claims 1-6, wherein before the performing (201) informatization processing on the user comment sentences based on the consensus phrase set, to obtain the candidate recommendation information set, the method further comprises:
forming (401) the consensus phrases presenting in the at least two pieces of user comment sentences into a consecutive phrase set;
calculating (402) scores of inverse document word frequencies of consensus phrases in the consecutive phrase set, and ranking the scores of the inverse document word frequencies; and
acquiring (403), according to ranking positions of the scores of the inverse document word frequencies in descending order, a preset number of consensus phrases in the consecutive phrase set, to form the consensus phrase set.

9. The method according to any one of claims 1-6, wherein the method further comprises:
receiving (804) user query information; and
determining (805) push information related to the query information based on the query information, the push information comprising a title of a hyperlink.

10. An apparatus for pushing information, the apparatus comprising:
a preprocessing module (901), configured to perform (201, 404, 801) informatization processing on user comment sentences based on a consensus phrase set, to obtain a candidate recommendation information set, the candidate recommendation information set comprising at least one consensus comment sentence, and the consensus phrase set comprising: a consensus phrase presenting in at least two pieces of user comment sentences;
a vector module (902), configured to determine (202, 405, 802) a representation vector of each consensus comment sentence in the candidate recommendation information set; and
a pushing module (903), configured to determine (203, 406, 803), based on the determined representation vector of each consensus comment sentence, an attractiveness ranking position of each consensus comment sentence in the candidate recommendation information set, and pushing information according to the determined attractiveness ranking positions.

11. The apparatus according to claim 10, wherein the pushing module (903) is further configured to:
calculate (701) an inner product of the representation vector of each consensus comment sentence and a representation vector of a preset sentence, and rank calculated results of inner products;
determine (702), based on ranking positions of the calculated results of the inner products, the attractiveness ranking position of each consensus comment sentence; and
push (703) a consensus comment sentence having a highest attractiveness ranking position, according to the attractiveness ranking position of each consensus comment sentence in descending order.

12. The apparatus according to claim 10, wherein the preprocessing module is further configured to:
preprocess (501), based on the consensus phrase set, all of the user comment sentences, to obtain a consensus comment sentence set comprising at least one consensus comment sentence; and
perform (502) information filtering on the consensus comment sentence set to obtain the candidate recommendation information set.

13. An electronic device, comprising:
one or more processors (1101);
a storage apparatus (1102), storing one or more programs thereon;
the one or more programs, when executed by the one or more processors (1101), causing the one or more processors (1101) to implement the method according to any one of claims 1-9.

14. A non-transitory computer readable medium, storing a computer program thereon, the program, when executed by a processor, causing the processor (1101) to implement the method according to any one of claims 1-9.

15. A computer program product comprising a computer program, the computer program, when executed by a processor (1101), implementing the method according to any one of claims 1-9.
